# EUROPEAN PATENT APPLICATION

(11) **EP 2 701 293 A2**
(43) Date of publication of application: **26.02.2014**
(21) Application number: 13150382.3
(22) Date of filing: 07.01.2013
(51) Int. Cl.: H02M 1/10

(54) **Improved dual-input power supply**

(30) Priority: 21.08.2012 TW 101216082
(71) Applicant: GCCA Inc., Tortola (VG)
(72) Inventor: Szu, Oliver, Taipei (TW)
(74) Representative: Viering, Jentschura & Partner Patent- und Rechtsanwälte

(57) **Abstract**

The present invention provides an improved dual-input power supply including a dual-input terminal, an input source selection controller, a load adjustment switch circuit, a power conversion circuit, an automatic switch circuit for power interruption, and an output terminal. The input source selection controller is adapted to select a mode for power inputting comprising AC power source in priority mode, DC power source in priority mode, and dual-power source supply (AC and DC power sources simultaneously supplying) mode. Therefore the present invention allows users to select flexibly power source input mode and maintains uninterruptible power supply by switching automatically the power source input mode upon accident power failure.

## Description

### FIELD OF THE INVENTION

The present invention relates to a power supply, and more particularly to an improved dual-input power supply.

### BACKGROUND OF THE INVENTION

A conventional power supply, which connects to single power source, is generally provided with an AC ("alternating current") socket for an external AC power source, and in which a convert circuit is also utilized to generate stabilized direct current for supplying to a device to be powered.

However, the conventional power supply above has a disadvantage that the power supply (or a rectifier) is required to transform municipal electricity in form of alternating current into desired DC ("direct current") forms to activate electrical equipment since most of electrical equipment such as computers, stereo set, and televisions are designed to receive direct current as power. If a power source provides only direct current, the power supply above is unable to work and users need to buy a power supply with DC to DC converter for generating direct current adaptable to most of electrical equipment, resulting in inconvenience to the users.

Another conventional power supply with dual inputs receives simultaneously alternating current and direct current, and for users such power supply gives no options to select among different supply modes because it is designed to always work in dual-input mode. As such, energy waste issue is raised.

In view of this, the present invention provides an improved dual-input power supply with advantage that users are allowed to select one of various supply modes as desired and that normal power supply function is maintained even power failure occurs, that is uninterruptable power supply feature.

### SUMMARY OF THE INVENTION

To solve the aforementioned problems in prior art that the power supply with single input cannot operate normally when a power source is an AC source, resulting in inconvenience in use, and that the conventional power supply with dual inputs is limited to receive alternating current and direct current simultaneously, resulting in impossibility of selecting among different power supply mode and subsequent energy waste, an improved dual-input power supply of the present invention is provided.

The improved dual-input power supply of the present invention comprises a dual-input terminal, an input source selection controller, a load adjustment switch circuit, a power conversion circuit, an automatic switch circuit for power interruption, and an output terminal, wherein the input source selection controller is adapted to select one of following modes for power inputting : AC power source in priority, DC power source in priority, and dual-power source supply (AC and DC power sources simultaneously supplying).

The improved dual-input power supply of the present invention allows users to select flexibly desired power source input mode and maintains uninterruptible power supply by switching automatically the power source input mode upon accident power failure.

These and other advantages will become apparent from the following description of preferred embodiments taken together with the accompanying drawings and the appended claims.

### BRIEF DESCRIPTION OF THE DRAWINGS

Fig. 1 illustrates a functional block diagram of an improved dual-input power supply in accordance with one embodiment of the present invention; and
Fig. 2 illustrates a flow chart of a procedure for using the improved dual-input power supply in accordance with one embodiment of the present invention.

### DETAILED DESCRIPTION OF THE PREFERRED EMBODIMENT

The invention will now be described with the preferred embodiments and aspects and these descriptions interpret structure and procedures of the invention only for illustrating but not for limiting the Claims of the invention. Therefore, except the preferred embodiments in the specification, the present invention may also be widely used in other embodiments.

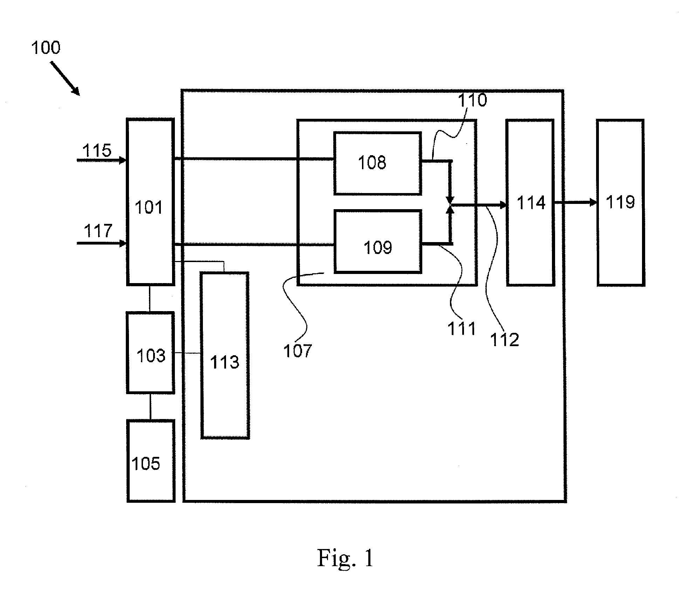

Referring to Fig. 1, a functional block diagram of an improved dual-input power supply 100 of the present invention shows: a dual-input terminal 101 to which a working power source is inputted and the dual-input terminal 101 subsequently outputting the working power source to a power conversion circuit 107, the working power source comprising an AC power source 115 and a DC power source 117; an input source selection controller 103 coupled to the dual-input terminal 101 and selecting a power supply mode for the same, the power supply mode may be one of the following modes: AC power source 115 in priority, DC power source 117 in priority, and dual-power source 115 and 117 supply; a load adjustment switch circuit 105 coupled to the input source selection controller 103 for adjusting inputted power source loads (of AC and DC) for the dual-input terminal 101; and an automatic switch circuit for power interruption 113 coupled to both the dual-input terminal 101 and the input source selection controller 103 and adapted to detect a power supply status at the dual-input terminal 101. When the AC power source in priority mode is selected by the input source selection controller 103, the automatic switch circuit for power interruption 113 sends, upon the AC power source 115 interrupting, a power interruption signal to the input source selection controller 103 and the input source selection controller 103 switches automatically to a DC power source input mode in response. When the DC power source in priority mode is selected by the input source selection controller 103, the automatic switch circuit for power interruption 113 sends, upon the DC power source interrupting, a power interruption signal to the input source selection controller 103 and the input source selection controller 103 switches automatically to an AC power source input mode in response. Therefore, the improved dual-input power supply maintains its supply function in any case. The power conversion circuit 107 comprises a full-wave rectification circuit 108 for transforming the inputted AC power source 115 into a first unidirectional direct current 110, and a DC to DC converter 109 for transforming the inputted DC power source 117 into a second unidirectional direct current 111 where the first unidirectional direct current 110 and the second unidirectional direct current 111 have same rating value. The two unidirectional direct currents converge to form a third unidirectional current 112 which advances to the output terminal 114 and a device to be powered 119 in turn. Alternatively, in a variation of the embodiment the first and the second unidirectional direct currents 110 and 111 are unidirectional direct currents of different rating values.

In one embodiment, the full-wave rectification circuit 108 may be a bridge rectifier or a center-tapped circuit.

In further embodiment, the device to be powered 119 may be an ATX power supply circuit or an SFX power supply circuit.

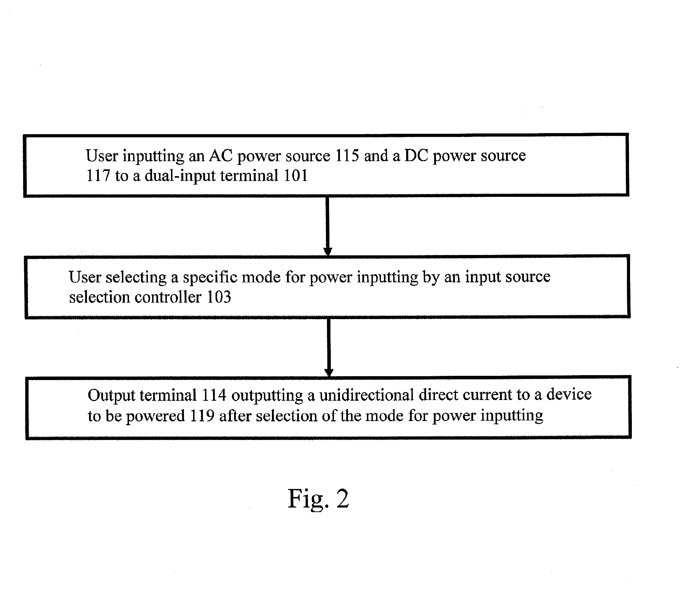

Fig. 2 shows a flow chart of a procedure for using the improved dual-input power supply 100 of the present invention. Firstly, an AC power source 115 and a DC power source 117 are inputted to the dual-input terminal 101 via a transmission cable provided by a supplier, and a user then selects a specific mode for power inputting by the input source selection controller 103, selectable mode for power inputting comprising AC power source in priority, DC power source in priority, and dual-power source supply (AC and DC power sources simultaneously supplying). The output terminal 114 outputs a unidirectional direct current to the device to be powered 119 after the supply mode is selected.

The foregoing description is a preferred embodiment of the present invention. It should be appreciated that this embodiment is described for purposes of illustration only, not for limiting, and that numerous alterations and modifications may be practiced by those skilled in the art without departing from the spirit and scope of the invention. It is intended that all such modifications and alterations are included insofar as they come within the scope of the invention as claimed or the equivalents thereof.

## Claims

1. An improved dual-input power supply, comprising:
a dual-input terminal to output an inputted working power source to a power conversion circuit, the working power source comprising an AC power source and a DC power source, the power conversion circuit comprising a full-wave rectification circuit for transforming the AC power source into a first unidirectional direct current and an DC to DC converter for transforming the DC power source into a second unidirectional direct current where the first unidirectional direct current and the second unidirectional direct current converge to form a third unidirectional current into an output terminal which outputs the third unidirectional current to a device to be powered;
an input source selection controller coupled to the dual-input terminal for selecting a power supply mode for the dual-input terminal;
a load adjustment switch circuit coupled to the input source selection controller for adjusting inputted working power source loads for the dual-input terminal; and
an automatic switch circuit for power interruption coupled to the dual-input terminal and the input source selection controller for detecting a power supply status at the dual-input terminal.

2. The power supply of claim 1, wherein the full-wave rectification circuit is referred to as a bridge rectifier.

3. The power supply of claim 1, wherein the full-wave rectification circuit is referred to as a center-tapped circuit.

4. The power supply of claim 1, wherein the input source selection controller is capable of selecting an AC power source in priority mode as the power supply mode for the dual-input terminal.

5. The power supply of claim 4, wherein when the power supply status at the dual-input terminal is detected to be the AC power source in priority mode by the automatic switch circuit for power interruption, the automatic switch circuit for power interruption sends, upon the AC power source interrupting, a power interruption signal to the input source selection controller and the input source selection controller switches automatically the power supply mode to a DC power source input mode in response.

6. The power supply of claim 1, wherein the input source selection controller is capable of selecting a DC power source in priority mode as the power supply mode for the dual-input terminal.

7. The power supply of claim 6, wherein when the power supply status at the dual-input terminal is detected to be the DC power source in priority mode by the automatic switch circuit for power interruption, the automatic switch circuit for power interruption sends, upon the DC power source interrupting, a power interruption signal to the input source selection controller and the input source selection controller switches automatically the power supply mode to an AC power source input mode in response.

8. The power supply of claim 1, wherein the input source selection controller is capable of selecting an AC and DC power sources simultaneously supplying mode as the power supply mode for the dual-input terminal.

9. The power supply of claim 1, wherein the device to be powered is referred to as an ATX power supply circuit.

10. The power supply of claim 1, wherein the device to be powered is referred to as an SFX power supply circuit.
